Europäisches Patentamt

(19) European Patent Office

Office européen des brevets

(11) EP 0 661 123 B1

## (12) EUROPEAN PATENT SPECIFICATION

(45) Date of publication and mention
of the grant of the patent:
**04.12.1996 Bulletin 1996/49**

(51) Int. Cl.⁶: **B23B 31/11**, B23B 31/02

(21) Application number: **93830532.3**

(22) Date of filing: **29.12.1993**

(54) **A modular milling system and associated cutter.**

Modulaires Frässystem und Schneidwerkzeug dafür

Système de fraisage modulairé et outil de coupe pour celui-ci

(84) Designated Contracting States:
**CH DE ES FR GB IT LI PT SE**

(43) Date of publication of application:
**05.07.1995 Bulletin 1995/27**

(73) Proprietor: **ANSALDO ENERGIA S.P.A.**
**I-16152 Genova (IT)**

(72) Inventors:
• **Orsolon, Giovanni**
**I-16132 Genova (IT)**
• **Canova, Giovanni**
**I-16166 Genova (IT)**
• **Leoncini, Giulio**
**I-16013 CAmpo Ligure (IT)**

(74) Representative: **Falcetti, Carlo et al**
**c/o JACOBACCI & PERANI S.p.A.**
**Via Visconti di Modrone, 7**
**20122 Milano (IT)**

(56) References cited:
DE-B- 1 266 613          FR-A- 2 529 126
US-A- 2 328 602

## Description

The present invention relates to a modular milling system and associated cutter, specifically for use with automatic NC milling machines, in particular multispindle machining units.

Modern automatic NC milling machines include a machining unit equipped with a machining head which can be moved along the three cartesian axes relative to a mechanical workpiece and may be set angularly as dictated by individual machining requirements.

The machining head is provided with at least one cutting tool or cutter adapted to be rotated, thereby to remove chip from the workpiece.

A numerical control program allows the machine to be controlled such that the machining head will rotate the cutter at a predetermined speed while displacing it along one or more predetermined profiles corresponding to the shape to be progressively imparted to the workpiece.

The numerical definition of these profiles takes account, through appropriate parameters, both of the clamped position of the workpiece to the machine, which may vary between workpieces, and the position of the cutting edge of the cutter relative to unvarying references of the machining head.

This position may vary as a cutting tool is exchanged with a tool of some other type or as tools of one type are replaced after they have undergone various re-grinding operations and consequent alteration of their dimensions.

Each cutter edge has, in fact, a limited life span which depends on several factors, such as cutting speed, hardness of the workpiece versus that of the tool, nature of the material to be machined which, however soft, may cause the tool to wear at varying rates, etc..

Thus, cutters may require, similar to any cutting tools, to be replaced at frequent intervals during the machining process.

The parameter changing operation, while allowing the machine to be controlled by the same numerical program to always give the same result in mass production despite replacement of the cutting tools and the workpieces, is invariably a critical one which involves stopping the production cycle and, hence, reduced throughput.

In order to correctly change the parameters, the positions of workpieces being machined successively and the position of the tool cutting edge must be checked against predetermined references.

These measuring operations are precision ones which are time-consuming and eventually cost-intensive, and should be avoided whenever possible.

For this purpose, the workpiece setting is carried out using equipment which allows in mass production applications for repetitive setting of the workpieces, while the setting of the cutting edge relative to fixed references is maintained using cutter holding spindles which are all identical and can be similarly set on the machining head.

The spindles constitute cutter holding devices which allow a cutter to be aligned and its axial position adjusted to set the tool cutting edge at predetermined distances from the fixed spindle references.

The spindles also constitute removable elements having the same dimensions, and are easily picked up from a magazine and mounted to the machining head in an automatic manner by application of appropriate commands to the machine tool.

In this way, the axial setting of the tool bit in the spindle can be performed off line by acting on spindle/tool pairs presently unused.

This solution is mandatory in the instance of multi-spindle milling machines, wherein the same numerical control program is to control the simultaneous and identical operation of plural cutting tools and, while promoting production efficiency, still has a number of drawbacks.

Automatic NC machine tools are highly expensive and involve important investment costs. Accordingly, they tend to be utilized at the top of their capacity, keeping them in operation round the clock in view of their fully automated operation, as extended to include replacement of the cutting tools, requiring little or no supervision.

On the other hand, the metrological operations for setting and adjusting the spindle/cutter assemblies, which require the availability of highly qualified personnel, can hardly be automated and must be performed of preference (unless shift working is resorted to) within a working schedule of eight hours per day.

As concerns the cutting tool replacement intervals, which for some machining processes may be as short as one hour, and the spindle/cutter assembly setting and adjusting times, it is necessary that a large number of spindles and cutting tools, one order higher than that of the machining heads and spindle/cutter pairs presently used, be allowed for.

As for the cutting tools, the problem is intensified by that the cutting tools, inherently expensive, require to be re-ground and not unfrequently casehardened and cyanide hardened using procedures which can only be carried out at specialized shops (usually by the tool manufacturer) away from the user's premises.

The tool shipment, processing, and returning in batches may take several days, and accordingly, spares must be stored in sufficient quantities to fill a continued demand spread over a time span of several days.

Thus, it may easily occur that the inventory of spare tools has to exceed by two orders (100 to 1) the number of the tools presently in use.

Furthermore, each tool is to be individually set in place and engaged to a corresponding spindle for use. A cutter and related spindle of the kind referred to above is known from FR-A-2529126.

These drawbacks are overcome, at least to a large extent, by the modular milling system and associated cutter which form the subject matter of the present invention utilizing a cutting tool comprised of two separate elements which can be connected to each other in a predetermined fixed spatial relationship, a first element forming a position-adjustable tang for engagement in a spindle of a machine tool, and the second element forming the cutting tool proper, connected to the tang in a detachable manner for transport to a regenerating shop for re-grinding and casehardening, or ammonia or cyanide hardening, according to necessity.

A number of advantages accrue from this simple concept.

The detachable tangs from the active element constitute a separate element exclusively devoted to supporting the active element and to setting on the spindle, do not require to be processed upon replacement, and become somehow part of the spindle.

Thus, they may be inventoried in much smaller numbers than the active elements and equal to the number of the spindles.

The active elements, detachable from their tangs, constitute a wear part provided with precision mounting references and much smaller in size than the tang/active element assembly and an equivalent conventional single piece cutter.

They are, therefore, inherently less expensive and bulky, easier to transport in batches, and susceptible of being hardened at a much lower cost.

In fact, surface hardening treatments, whether providing case/ammonia or cyanide hardening, must be applied in a medium (furnaces or baths) under controlled conditions and for predetermined time periods, and the treatment cost is essentially tied to the volume occupied by the workpiece being treated and proportional thereto.

The mechanical characteristics of the two elements may be different; for example, resistance to shock and fatigue may be primary considerations with the tang, and hardness and resistance to temperature with the active element.

Finally, the grinding operation can be performed on a number of active elements to regenerate batches of cutters, all to the same size, that is having an active profile at equal distances from fixed references for the element, so that all the cutters from one batch can be fitted interchangeably to the same tang (or to similarly set tangs) with no need to adjust the tang position on the spindle.

In this way, the number of the adjustment operations required can be cut down drastically.

According to a further aspect of the present invention, the tang and active element are connected to each other by easily and quickly applied means, e.g. threaded to each other using a wrench, even by unskilled personnel in a very short time.

In this way, with but minimal involvement of the (maybe unskilled) personnel in the shift, it becomes possible to pre-arrange the various spindles for replacement in a virtually continual fashion, and in theory, the number of the spindles undergoing replacement can be reduced to twice as many as those presently in use.

The features and advantages of the present invention will be more clearly apparent from the following description of a preferred embodiment thereof and the accompanying drawings, in which:

Figure 1 is a part-sectional side view of a single piece cutter of a known type and of a cutter aligning and holding spindle;
Figure 2 shows schematically an enlarged detail view of the cutter in Figure 1, and in particular of its cutting edge;
Figure 3 is a part-sectional side view of a two-piece cutter embodying the present invention;
Figure 4 is a perspective view showing schematically a modular multispindle milling system embodying the present invention.

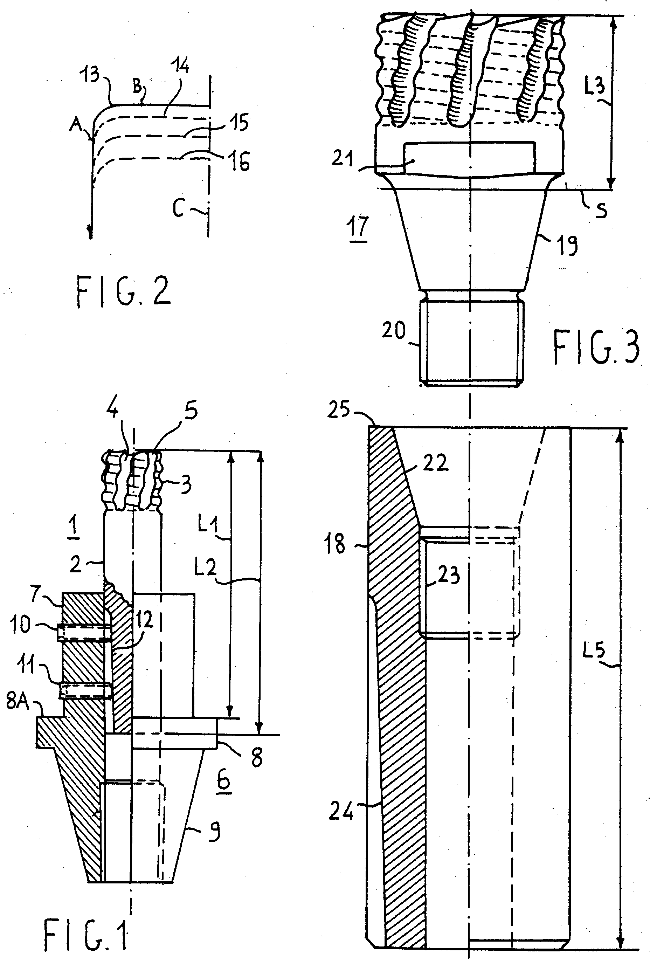

With reference to Figure 1, a cutter 1 of a conventional type comprises a cylindrical element or tang 2 overlaid by a variously shaped active element 3 formed with peripheral grooves 4, 5 and with a head providing cutting edges having a convenient rake.

The cutter tang can be engaged in a spindle 6 of a machine tool.

The spindle 6 comprises a cylindrical sleeve 7 having a gripping flange 8 and extending into a conical lug 9 for engagement with a machine tool head arranged to impress a rotary movement on it.

A cylindrical socket having the same diameter as the cutter tang extends through the spindle, usually but not necessarily throughout the spindle length.

An end portion of the cylindrical socket at the conical lug location is threaded for securing, maybe automatically, the spindle on the machining head, in turn provided with a conical socket for receiving the lug 9.

The position of the spindle on the machining head is defined exactly, both centrally and in the axial direction, by the mating fit between the conical lug 9 and engagement socket, the flange 8 being just convenient for automatically gripping the spindle in mechanical robot means.

However, it may be assumed, for simplicity of illustration, that the plane 8A of the upper flange face forms a reference plane to which the distance L1 of the tool cutting edge is to be referred as a parameter entry of the machine tool NC program.

The end mill 1 can be shifted axially on the spindle until the distance of the cutting edge from the plane 8A becomes equal to the preset parameter, and can be clamped in place by means of clamp screws 10, 11 acting on a splay or groove 12 of the tang 2.

Alternatively, the control parameter of the numerical control program could be changed, but for machining processes which require frequent change of the cutting tool, the former choice is preferable.

In addition, the former choice is the only possible one with multispindle machine tools wherein a plurality of tools are to carry out the same operation simultaneously on a plurality of workpieces to produce the same result.

Figure 2 is an enlarged view showing schematically a detail of the cutter 1, specifically the tool cutting edge 13 profile.

Preferably, the active portion of the cutting edge is a straight or curvilinear section AB spaced somewhat from the cutter axis and fairly short in the axis direction.

The cutting effectiveness depends on the cutting speed, which should not drop below predetermined values.

This imposes a lower limit on the distance of point B from the axis C.

Cutting edge wear requires that the cutting edge profile be regenerated, which is obtained by a grinding operation followed by surface hardening treatments.

Grinding leads to generating a fresh cutting edge 14 profile, similar to the original one but shifted relative to it, so that the axial length of the cutter is reduced.

The grinding operation can be performed several times to generate the cutting profiles 15, 16, etc.

It can be seen, therefore, that the axial length $L2$ of the cutter decreases over time and that re-grinding and re-use require that the cutter be removed from the spindle and shipped to a specialized grinding and treatment shop, and after it is returned, that the dressed tool be mounted and set on the spindle.

The active portion 3 of the cutter represents a minor portion of the whole cutter 1, the function of the tang 2 being not only that of permitting the cutter to be engaged in the spindle but also of spacing the active profile from the machining head to suit the configuration of the workpiece, so as to prevent interference between the workpiece and the spindle and/or the machining head.

In practice, the active portion may amount to 1/5 to 1/10 of the cutter overall axial length.

It can be seen, therefore, that the hardening treatments associated with each re-grinding involve the whole cutter mainly at portions thereof which require no treatments and represent a non-negligible cost.

It should be further noted that, even where a plurality of cutters are available which are all identical dimensionally, whether they are new or regenerated, their alternation on one or more machining heads requires that their positions be set on the spindle.

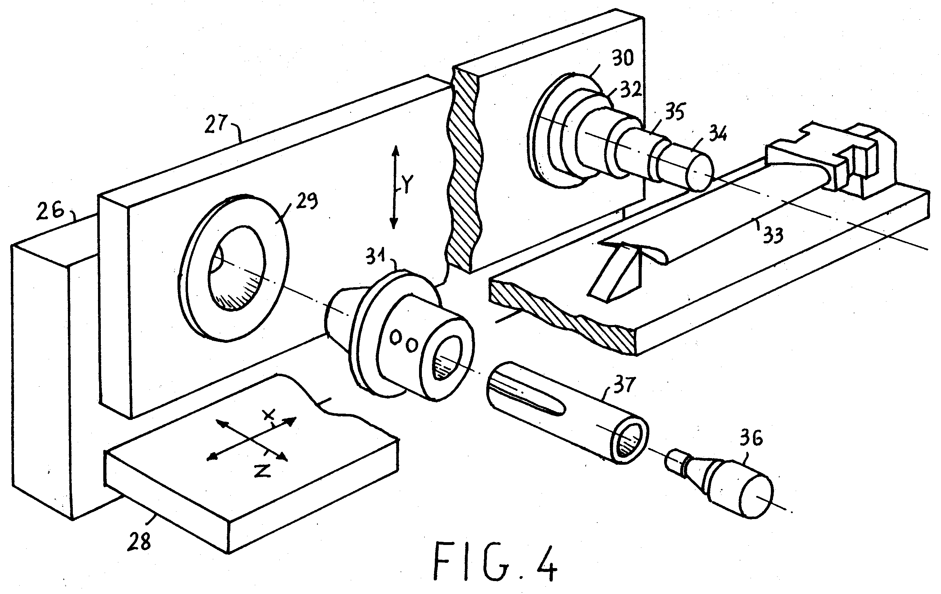

Figure 3 is an enlarged view with respect to Figure 1 of a cutter embodying the present invention which avoids the drawbacks mentioned above and allows of machining processes wherein the tool change strictly involves no position setting on the spindle.

The cutter of Figure 3 comprises two discrete parts which can be connected together, specifically an active element 17 and a mounting tang 18.

The active element 17, having an active profile identical with that of the cutter in Figure 1, for example, is provided with a conical lug 19 terminated with a threaded cylindrical clamping boss 20.

Intermediate to the cutting edges of the tool and the conical lug 19, the active element 17 has a ring with two opposite parallel clamping planes, one 21 of which is shown in Figure 3.

The mounting tang 18 comprises a cylindrical element which is formed on one end with a conical engagement socket 22 matching the conical lug 19 and terminating in a threaded cylindrical hole 23 for connection to the boss 20.

The cylindrical hole 23 may span the entire length of the tang as shown in the drawing figure.

In addition, the tang 18 is formed with a splay or slot 24 for co-operation with locking screws, such as the screws 10, 11 in Figure 1, of a spindle.

The active element 17 is attached to the tang 18 by inserting the lug 19 into the conical socket 22 and tightening the boss 20 in the threaded hole 23.

The precise keying and positioning of the active element in the axial direction relative to the tang is ensured by the bevel pair with an axial tolerance which can be easily kept within ± 0.05 mm or less.

To ensure precise mounting and ease of removal the taper should be in the 10° to 30° range, preferably on the order of 15÷20°.

The tightening boss, which is preferably formed with a multi-start threadway, only functions to secure the active element on the tang.

The thread-in direction is, of course, opposite to the direction of rotation contemplated for the cutter such that, in machining, the resisting torque applied to the cutter will keep the active element tightly to the tang.

When the section of the conical lug 19 which lies flush with the tang end 25 is denoted by S, and with the active element connected to the tang, the resultant tool, which may have the same dimensions as the cutter 1 in Figure 1, has an axial length $L=L3+L5$, where $L3$ is the length of the active portion of the active element, which may vary with the number of re-grindings undergone by the tool.

The overall dimensions of the active element are on the order of 1/3 of the tool resulting from the connection of the tang to the active element.

It will be appreciated from the foregoing that for re-grinding, it will suffice that the active element 17 be threaded off the tang and subjected to grinding and hardening treatments, with apparent savings in the treatment costs which will reduce illustratively to one third of those for a tool of equal size.

In addition, it can be seen that the re-grinding operations do not require that the tang be removed from the spindle, so that when a set of active elements or milling heads are available which have equal dimensions, to change the tools, a worn active element can be replaced with an active element of like dimensions, with no need to reset the tool in position.

This is obviously impossible with conventional single piece tools.

Dimensional uniformity for a plurality of active elements, as possibly divided into batches according to the extent of wear undergone thereby, can be easily achieved by the grinding process.

This process is also simplified by that the conical lug 19 of the active elements, in combination with the threaded boss 20, provides a positive, precise and repetitive means of setting them on a grinder, on which a tang being the full equivalent of the tang 18 in Figure 3 can be mounted as a holder for the elements being ground.

A two-part cutter like that shown in Figure 3 can be used to advantage on multi-spindle machine tools set up as modular systems for simultaneously and identically machining a plurality of workpieces which are to be identical with one another, as well as on single spindle NC milling machines.

With such systems, a single numerical control program controls a plurality of spindles, and it is therefore necessary that the cutting edge profile of the various tools be at the same distance from a fixed spindle reference.

This can be easily obtained by adjusting once for all the position of a tang such as 18 in each spindle and each time engaging on the various tangs active elements, all with the same dimensions, at each change.

Figure 4 shows schematically a modular milling system embodying the present invention.

The system comprises a machining unit 26 accommodating various drives and provided with a machining head 27 and a machine bed 28 movable relative to each other.

For enhanced constructional simplicity and improved machining accuracy, the relative mobility of the bed and machining head is generally obtained by making the bed movable in one or more directions and the machining head movable in another direction.

For example, the bed 28 could be movable along orthogonal directions denoted by the vectors X, Z in Figure 4, and the machining head 27 could be movable along the direction denoted by the vector Y, orthogonal to the former two.

The head 27 (or the bed), moreover, may be adjustable angularly such that the axis of rotation of the cutters, shown parallel to the vector Z in Figure 4, will take an orientation whichever in the plane YZ.

It should be understood that the machining units may be characterized by different degrees of mobility to suit individual machining requirements.

The machining head has a plurality of rotating housings each adapted to receive and lock automatically therein a corresponding spindle for operation of the latter.

Shown in Figure 4 are but two rotating housings 29 and 30 and two spindles 31, 32, although their numbers would be much larger in actual practice.

For example, on machining units manufactured by RIGIDE with Model No. NX 155-255, the number of the spindles and associated drives is 5.

A plurality of workpieces are placed, using known means, on the bed 28 and laid each in the same relationship with a corresponding spindle.

One of these workpieces is shown in Figure 4 to comprise a turbine blade 33 which is to be rough-shaped by milling using a cutter 34 which has its tang 35 mounted in a spindle 32.

Also shown in Figure 4 is an exploded view of an active element 36 to be connected to a tang 37 as previously described to form a cutter engaged in the spindle 31, in turn engaged in the housing 29.

It is apparent that in a system such as this, the change of cutting tools will involve no setting of the tangs in the spindles if the active elements have all the same dimensions.

In addition, since the tangs do not require to be removed from the spindles for re-grinding the active elements, the active elements may be exchanged for others, even different in dimensions on condition that they be identical with one another, by just updating the corresponding parameter of the NC program for the different dimension with no need to re-adjust the spindles.

Thus, a production system is provided which is uniquely efficient, suitable for continual use, and largely unaffected by conditioning factors of the metrological type.

The foregoing description only covers a preferred embodiment of the invention, but it should be understood that many changes may be made thereunto without departing from the spirit of the invention.

For example, the spindles clamping the cutter tangs may be provided with clamping jaws, thereby doing away with the need for clamping screws and corresponding slots in the tool tangs.

Also, the active elements, being preferably secured on the tang by means of a threaded boss, could be secured instead by means of bayonet arrangements or of a pulling screw extending through the length of the tang.

**Claims**

1. A two-piece modular cutter for a milling machine, preferably an NC machine, wherein the cutter is engaged and set axially and longitudinally in a removable spindle (6) for tool replacement, the spindle being univocally positioned with respect to holding and driving members, characterized in that it comprises a tang (18) for engagement in a spindle or chuck (6), said tang (18) being provided with a conical socket (22), having engaging, aligning and axial positioning functions, and first locking means (23) for an active element (17), and an active element (17) provided with at least one working cutting edge, a cone (19) for engagement and univocal axial positioning in said conical socket (22), and second means (20) co-operating with said first means (23) to lock said active element (17) on said tang (18).

2.  A cutter as in Claim 1, wherein said active element comprises a plane pair (21) for clamping and releasing said active element (17) to/from said tang (18).

3.  A cutter as in Claim 1, wherein the taper of said conical socket (22) and said engagement cone is in the 10° to 30° range.

4.  A cutter as in Claim 3, wherein said first and second locking means consist of a cylindrical socket (23) coaxial with said conical engagement socket (22) with a multi-start threadway, and a cylindrical boss coaxial with said engagement cone (19) with a multi-start threadway, mating with said cylindrical socket (23).

5.  A modular cutter assembly comprising at least a pair of cutters as in Claim 1 having the same cutting edge profile at equal axial distance from said engagement, alignment and positioning cone.

6.  A modular milling assembly comprising a multi-spindle machining unit (26), a plurality of spindles (31,32) removable from said unit (26) and univocally positionable in said unit, each for aligning, positioning adjustably in the axial direction and locking in place a cutter, characterized in that it comprises:

    a plurality of tangs (35,37), each for engagement with one of said spindles (31,32), each said tang being provided with a conical socket (22) with engagement, alignment and univocal axial positioning functions, and first locking means (23) for an active element (34,36), each said tang (35,37) being aligned, positioned axially and locked in place in one of said spindles (31,32), and
    a plurality of active elements (34,36), each provided with at least one working cutting edge, a cone (11) for engagement, alignment and univocal axial positioning in said conical socket (22), and second means (20) co-operating with said first means (23) for locking in said tang (18), said active elements (34,36) being all identical with one another and interchangeably engageable in the conical engagement socket (22) for said tangs (35,37).

**Patentansprüche**

1.  Zweiteilige, modulare Schneidevorrichtung für eine Fräsmaschine, vorzugsweise eine NC-Maschine, wobei die Schneidevorrichtung in einer abnehmbaren Spindel (6) zum Werkzeugaustausch im Eingriff steht und axial und longitudinal fixiert ist, wobei die Spindel bezüglich Halterungs- und Antriebsmittel eindeutig positioniert ist, dadurch gekennzeichnet, daß sie einen Griff (18) zum Eingreifen in eine Spindel oder ein Werkzeugfutter (6) enthält, wobei der Griff (18) mit einem konischen Sockel (22) ausgestattet ist, der eingreifende, ausrichtende und axial positionierende Funktionen hat, und ein erstes, Festsetzmittel (23) für ein aktives Element (17), und ein aktives Element (17), das mit mindestens einer Arbeitsschneidkante ausgestattet ist, einen Konus (19) für den Eingriff und eindeutige, male Positionierung in dem konischen Sockel (22) und ein zweites Mittel (20), das mit dem ersten Mittel (23) zusammenwirkt, um das aktive Element (17) auf dem Griff (18) festzusetzen.

2.  Schneidevorrichung nach Anspruch 1, wobei das aktive Element ein Flächenpaar (21) umfaßt, um das aktive Element (17) auf dem Griff (18) einzuspannen und von ihm zu lösen.

3.  Schneidevorrichtung nach Anspruch 1, wobei die Verjüngung des konischen Sockels (22) und des Verbindungskonus im Bereich von 10° bis 30° liegt.

4.  Schneidevorrichtung nach Anspruch 3, wobei das erste und das zweite Festsetzmittel aus einem zylindrischen Sockel (23) besteht, der zu dem koni-schen Verbindungssockel (22) mit Mehrfachstart-gewindegang koaxial steht, und aus einer zylindrischen Anschlußfläche, die zu dem Eingreifkonus (19) mit Mehrfachstartgewindegang, der zu dem zylindrischen Sockel (23) paßt, koaxial steht.

5.  Modulare Schneideanordnung, die mindestens ein Paar Schneidevorrichtungen nach Anspruch 1 umfaßt, die das gleiche Schneidkantenprofil in der gleichen axialen Entfernung von dem Eingreif-, Ausrichtungs- und Positionierungskonus aufweisen.

6.  Modulare Fräsvorrichtungsanordung, die eine Mehrfachspindel-Bearbeitungseinheit (26) umfaßt, mehrere Spindeln (31,32), die von der Einheit (26) abnehmbar und in der Einheit eindeutig positionierbar sind, jeweils zur Auszurichtung, zur einstellbaren Positionierung in der axialen Richtung und zur ortsfesten Festsetzung einer Schneidevorrichtung, dadurch gekennzeichnet, daß sie umfaßt:

    mehrere Griffe (35,37), jeweils für den Eingriff mit einer der Spindeln (31,32), wobei jeder Griff mit einem konischen Sockel (22) versehen ist, der eingreifende, ausrichtende und eindeutige, axial positionierende Funktionen besitzt, und ein erstes Festsetzmittel (23) für ein aktives Element (34,36) hat, wobei jeder Griff (35,37) ausgerichtet, axial positioniert und in einer der Spindeln (31,32) ortsfest festgesetzt ist, und mehrere aktive Elemente (34, 36), die jeweils mit mindestens einer Arbeitsschneidkante ausgestattet sind, einem Konus (11) für den Eingriff, die Ausrichtung und eindeutige, axiale Positionierung in dem konischen Sockel (22) und einem zweiten Mittel (20), das mit dem ersten Mittel (23) zur Festsetzung in dem Griff (18) zusammenwirkt, wobei die aktiven Elemente (34, 36) alle zueinander identisch sind und in dem konischen Verbindungssockel (22) für die Griffe (35, 37) austauschbar in Eingriff gebracht werden können.

**Revendications**

1.  Outil de coupe modulaire en deux pièces pour machine à fraiser, de préférence une machine à commande numérique, l'outil de coupe étant logé et ajusté axialement et longitudinalement dans une broche amovible (6) pour un remplacement d'outil, la broche étant positionnée de manière univoque par rapport à des éléments de support et d'entraînement, caractérisé en ce qu'il comprend une queue (18) destinée à être logée dans une broche ou un mandrin (6), ladite queue (18) comportant une cavité conique (22) ayant des fonctions d'entrée en prise, d'alignement et de positionnement axial, et un premier moyen (23) de blocage d'un élément actif (17), ainsi qu'un élément actif (17) comportant au moins une arête de coupe de travail, un cône (19) destiné à être logé et positionné axialement de manière univoque dans ladite cavité conique (22) et un second moyen (20) coopérant avec ledit premier moyen (23) pour bloquer ledit élément actif (17) sur ladite queue (18).

2.  Outil de coupe selon la revendication 1, dans lequel ledit élément actif comprend deux méplats (21) destinés au serrage et à la libération dudit élément actif (17) sur/de ladite queue (18).

3.  Outil de coupe selon la revendication 1, dans lequel la conicité de ladite cavité conique (22) et dudit cône d'entrée en prise est de l'ordre de 10° à 30°.

4.  Outil de coupe selon la revendication 3, dans lequel lesdits premier et second moyens de blocage consistent en une cavité cylindrique (23) coaxiale à ladite cavité conique d'entrée en prise (22) et comportant un taraudage à plusieurs départs, et une protubérance cylindrique coaxiale audit cône d'entrée en prise (19), comportant un filetage à plusieurs départs et qui est complémentaire de ladite cavité cylindrique (23).

5.  Ensemble modulaire d'outil de coupe comprenant au moins deux outils de coupe selon la revendication 1, ayant le même profil d'arêtes de coupe à des distances axiales égales dudit cône d'entrée en prise, d'alignement et de positionnement.

6.  Ensemble modulaire de fraisage comprenant une machine outil à plusieurs broches (26), plusieurs broches (31, 32) pouvant être enlevées de ladite machine (26) et pouvant être positionnées de manière univoque dans ladite machine, chacune étant destinée à aligner, positionner de manière ajustable en direction axiale et bloquer en place un outil de coupe, caractérisé en ce qu'il comprend :

    plusieurs queues (35, 37), chacune destinée à entrer en prise avec l'une desdites broches (31, 32), chacune desdites queues comportant une cavité conique (22) ayant des fonctions d'entrée en prise, d'alignement et de positionnement axial univoque, ainsi qu'un premier moyen de blocage (23) destiné à un élément actif (34, 36), chacune desdites queues (35, 37) étant alignée, positionnée axialement et bloquée en place dans l'une desdites broches (31, 32), et
    plusieurs éléments actifs (34, 36), chacun comportant au moins une arête de coupe de travail, un cône (11) destiné à entrer en prise dans, à être aligné sur et à être positionné axialement de manière univoque dans ladite cavité conique (22) et un second moyen (20) coopérant avec ledit premier moyen (23) de blocage situé dans ladite queue (18), lesdits éléments actifs (34, 36) étant tous identiques les uns aux autres et se logeant de manière interchangeable dans la cavité conique d'entrée en prise (22) destinée auxdites queues (35, 37).

FIG.2

FIG.3

FIG.1

FIG.4

EP 0 661 123 B1